# EUROPÄISCHE PATENTSCHRIFT

(11) **EP 1 770 946 B1**
(45) Veröffentlichungstag und Bekanntmachung des Hinweises auf die Patenterteilung: **23.11.2011**
(21) Anmeldenummer: 06120748.6
(22) Anmeldetag: 15.09.2006
(51) Int. Cl.: H04L 29/06, G06Q 20/00

(54) **Verfahren und Vorrichtung zum gesicherten Bereitstellen von Web-Diensten**
Procedure and device for secure providing of Web services
Procédé et dispositif pour la provision sécurisée des services de web

(30) Priorität: 29.09.2005 DE 102005046749
(43) Veröffentlichungstag der Anmeldung: 04.04.2007
(73) Patentinhaber: Siemens IT Solutions and Services GmbH, 81739 München (DE)
(72) Erfinder: Erb, Andreas, 81379, München (DE)
(74) Vertreter: Patentanwaltskanzlei WILHELM & BECK

(56) Entgegenhaltungen:
- EP-A- 1 265 202
- WO-A-02/46984
- US-A- 5 903 878

## Beschreibung

Die Erfindung bezieht sich auf die Ausführung von Web-Diensten zwischen Kunden und Anbietern, deren Endgeräte über ein Kommunikationsnetzwerk miteinander verbindbar sind.

Es handelt sich bei Web-Diensten um Dienste, die aus Applikationen heraus benutzbar sind. Sie sind für die Kommunikation zwischen Kommunikationsendgeräten konzipiert und über verschiedene Plattformen hinweg lauffähig. Beispiele für solche Web-Dienste, die in einem Kommunikationsnetzwerk realisiert sind, sind die:
- elektronische Buchung eines Fluges oder anderer Reisedienstleistungen,
- elektronische Abfrage der Bonität eines Kunden,
- elektronische Bestellung von Personaldienstleistungen, oder
- elektronische Erteilung eines Druck- und Frankierauftrags.

Mit der zunehmenden Verbreitung elektronischer Datenverarbeitung über Kommunikationsnetzwerke - insbesondere das Internet - spielen diese Web-Dienste eine zunehmende Rolle. Immer häufiger sind bei über Web-Dienste realisierten Prozessen nicht mehr nur ein, sondern gleich mehrere Web-Dienste betroffen. Ein Beispiel hierfür ist der oben erwähnte kombinierte Druck- und Frankierauftrag. Eine genaue Zuordnung der jeweils angefallenen Kosten zu den jeweils beteiligten Web-Diensten fällt dabei später häufig schwer.

Auch die Erbringung von Web-Diensten und die Übermittlung von Gebühreninformationen sind nicht unproblematisch. Das hängt vor allem damit zusammen, dass der an einem Geschäft beteiligte Kunde und der Dienstleistungserbringer in vielen Fällen nichts über die Vertrauens-, Leistungs- bzw. Zahlungsfähigkeit des anderen weiß. Gleichzeitig ist ihnen eine selbstständige Überprüfung des jeweils anderen kaum möglich, da dies den wirtschaftlichen Aufwand enorm erhöhen würde.

Hierzu ist bereits ein Verfahren aus der Offenlegungsschrift WO 200065493-A2 bekannt, bei dem ein Vermittler ein Zugangszertifikat generiert, das im Rahmen einer Abrechnungskette als Identifikation zwischen Dienstleistungserbringer und Kunden dient. Der Kunde fordert die Dienstleistung unter Beifügung des Zugangszertifikats beim Dienstleistungserbringer an. Dieser akzeptiert das Zugangszertifikat als Zahlungsversicherung und erbringt die Dienstleistung für den Kunden. Hierbei kann die Vertrauenswürdigkeit, die Zahlungsfähigkeit und die Leistungsfähigkeit der beteiligten Kunden und Dienstleistungserbringer nicht vollständig gewährleistet werden.

Aus der europäischen Offenlegungsschrift EP 1 265 202 A1 ist ein Verfahren für Handelsgeschäfte zwischen Betrieben bekannt, bei dem eine einheitliche Bezahlungsnummer CPN für jede Transaktion ausgestellt wird. Die Bezahlungsnummer dient der einheitlichen Identifizierung der Transaktion und des Abgleichs der Kauf- und Bezahlungsinformation. Die Ausstellung einer CPN für einen Benutzer ist abhängig von Geschäftsregeln wie beispielsweise seiner Autorisierung und einer Benutzerhierarchie.

Aus der US Patentschrift 5,903,878 ist ein Verfahren für elektronische Geschäfts- Transaktionen bekannt, bei dem eine durch einen Käufer initiierte Transaktionsanforderung zusammen mit einem einheitlichen Transaktionsidentifier an einen Geschäftsmann und.anschließend an einen Administrator übermittelt wird. Der Administrator kontaktiert den Käufer und übermittelt an diesen den Transaktionsidentifier, um zu bestätigen, dass die Transaktion von ihm initiiert wurde. Nach einer Überprüfung des Transaktionsidentifier und anderen Transaktionsinformationen durch den Käufer benachrichtigt der Administrator den Geschäftsmann und die Transaktion kann durchgeführt werden.

Ziel der Erfindung ist es, die Ausführung von Web-Diensten zwischen einem Kunden und einem Anbieter solcher Web-Dienste für beide sicherer zu gestalten. Dies wird ausgehend von den Merkmalen des Oberbegriffs des Patentanspruchs 1 erreicht durch dessen kennzeichnende Merkmale.

Die wesentlichen Merkmale sind:
- Endgeräte des Kunden, des Anbieters und eine Sicherungseinrichtung sind über ein Kommunikationsnetz (KN) verbindbar,
- Kunde und Anbieter werden in einer Sicherungseinrichtung registriert sind, die nach vorgesehener Kriterien hinsichtlich Zahlungs- und/oder Leistungsfähig überprüft wurden,
- ein Kunde fordert vor der Anforderung wenigstens eines Web-Dienstes bei der Sicherungseinrichtung einen Transaktionsschlüssel an, der ihm daraufhin nach einer ersten Überprüfung der Zahlungs- und/oder Leistungsfähigkeit von Kunde und Web-Dienstanbieter von der Sicherungseinrichtung übermittelt wird,
- der Kunde fordert mittels dieses Transaktionsschlüssels bei dem jeweiligen Anbieter zumindest eine Teilleistung eines Web-Dienstes an,
- der Anbieter fordert daraufhin bei der Sicherungseinrichtung eine Überprüfung des Transaktionsschlüssels an und dieser Transaktionsschlüssel wird nach wiederholter Überprüfung der Zahlungs- und Leistungsfähigkeit des Kunden und/oder Web-Diensterbringer von der Sicherungseinrichtung bestätigt,
- dem Kunden wird vom Anbieter daraufhin eine Referenznummer übermittelt,
- zum Abruf zumindest der Teilleistung des Web-Dienstes wird ein weiterer Transaktionsschlüssel vom Kunden bei der Sicherungseinrichtung angefordert und nach abschließender Überprüfung der Zahlungs- und Leistungsfähigkeit von Kunde und Web-Dienstanbieter diesem Kunden bereitgestellt wird,
- zumindest die angeforderte Teilleistung des Web-Dienstes wird unter Bezugnahme auf die Referenznummer mit dem weitern Transaktionsschlüssel abgerufen,
- nach Überprüfung des weiteren Transaktionsschlüssels wird zumindest die angeforderte Teilleistung des Web-Dienstes geleistet.
- Übermittlung von Gebühreninformationen nach einer Transaktion durch die vertrauenswürdige Sicherungseinrichtung unter Bezugnahme auf den Transaktionsschlüssel.

Der wesentliche Vorteil der Erfindung ist, dass die Zahlungs- und Leistungsfähigkeit sowohl generell als auch aktuell vor Durchführung des Web-Dienstes überprüft wird, um größtmögliche Sicherheit zu gewährleisten.

Im Folgenden wird die Erfindung anhand von Ausführungsbeispielen und mit Bezug auf die beigefügten Zeichnungen verdeutlicht. Dabei zeigen beispielhaft:
- Fig. 1: eine auf Web-Diensten basierende Buchung von Reiseleistungen,
- Fig. 2: einen als Web-Dienst ausgestalteten Druck- und Frankierauftrag,
- Fig. 3: die Bestellung von Personaldienstleistungen als Web-Dienst.

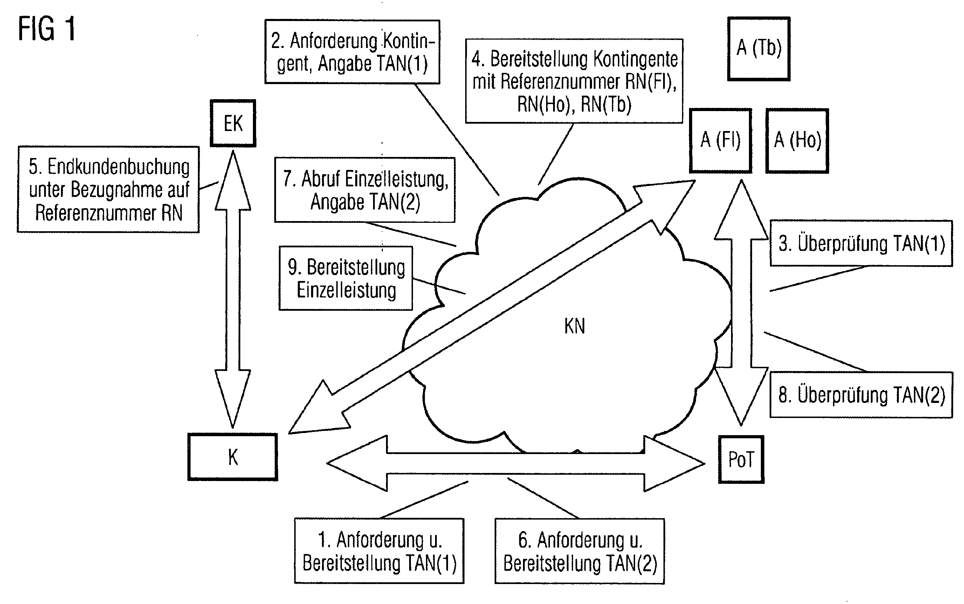

Ein erstes Ausführungsbeispiel (Figur 1) betrifft die Buchung von Reiseleistungen als Web-Dienst zwischen einem Reiseveranstalter als Kunden K, einer Sicherungseinrichtung PoT, Anbietern von Reiseleistungen für Flüge A(F1), Hotelübernachtungen A(Ho) und Transferbusse A(Tb), und einem Endkunden EK.

Kommunikationsendgeräte, z.B. Personal Computer, des Reiseveranstalters K, der Sicherungseinrichtung PoT und der Anbieter A sind über ein Kommunikationsnetzwerk KN, etwa dem Internet oder einem Intranet, miteinander verbindbar.

Kunde K und die Anbieter A sind alle bei der Sicherungseinrichtung PoT, die sie alle als vertrauenswürdig einstufen, als Nutzer mit ihren Adressen und weiteren Informationen, z.B. ihren Bankverbindungsdaten registriert. Im Rahmen dieser Registrierung werden Kunde K und die Anbieter A von der Sicherungseinrichtung PoT anhand bestimmter Kriterien hinsichtlich ihrer Leistungs-, bzw. Zahlungsfähigkeit überprüft. Hinsichtlich des Kunden K kann diese Überprüfung etwa in einer Bonitätsprüfung mittels einer Schufa-Anfrage liegen. Die Überprüfung der Leistungsfähigkeit der Anbieter A kann darüber hinaus beispielsweise durch die Auswertung der Kundenzufriedenheit von Kunden nach Abschluss einer Transaktion mit dem Anbieter A erfolgen.

Entscheidet sich der Reiseveranstalter als Kunde K, bestimmte Reiseleistungen, z.B. ein Kontingent von 500 Flügen zwischen bestimmten Flugzielen, zu erwerben, so fordert er über sein Kommunikationsendgerät zunächst bei der Sicherungseinrichtung PoT einen Transaktionsschlüssel TAN(1) an [siehe Fig. 1, 1. Anforderung und Bereitstellung TAN(1)]. Die Sicherungseinrichtung PoT überprüft daraufhin erneut die Zahlungsfähigkeit des Kunden K aufgrund vorgegebener Kriterien. Diese Überprüfung kann etwa in einer erneuten Schufa-Abfrage liegen oder aber auch in der Überprüfung eines bestimmten, zuvor eingeräumten maximalen monatlichen Transaktionsvolumens. Erfüllt der Kunde K die vorgegebenen Kriterien, so stellt die Sicherungseinrichtung PoT dem Kunden K über das Kommunikationsnetzwerk KN den Transaktionsschlüssel TAN(1) zur Verfügung. Dieser kann etwa in einer Zahlen- und oder Buchstabenkombination bestehen.

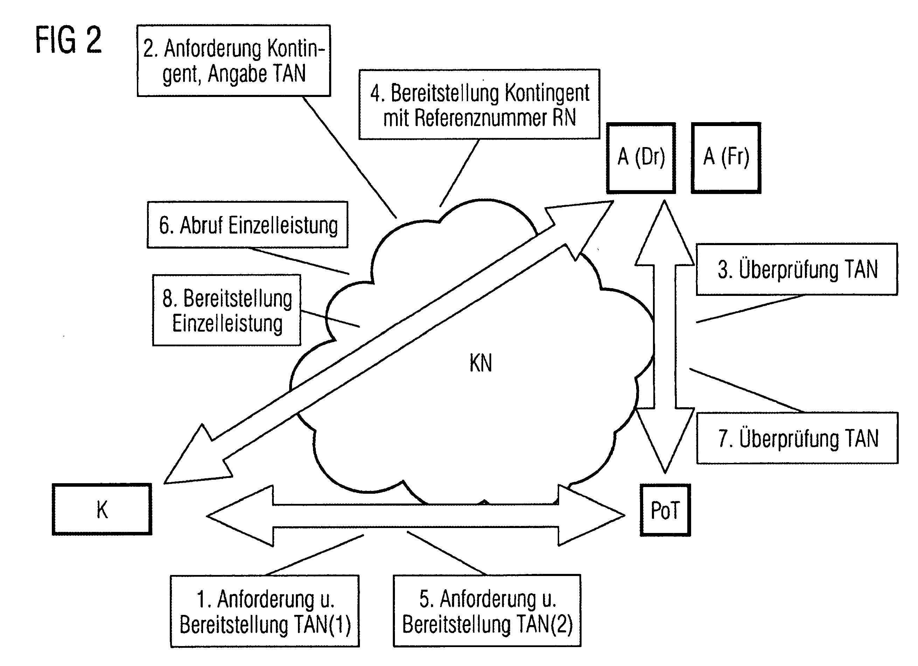

Der Reiseveranstalter K bucht sich dann beispielsweise in das elektronische Flugbuchungssystem des Anbieters A(Fl) ein, wählt sein gewünschtes Flugkontingent unter Angabe des Transaktionsschlüssels TAN(1) aus und schickt seine Anfrage ab [siehe Fig. 1, 2. Anforderung Kontingent, Angabe TAN].

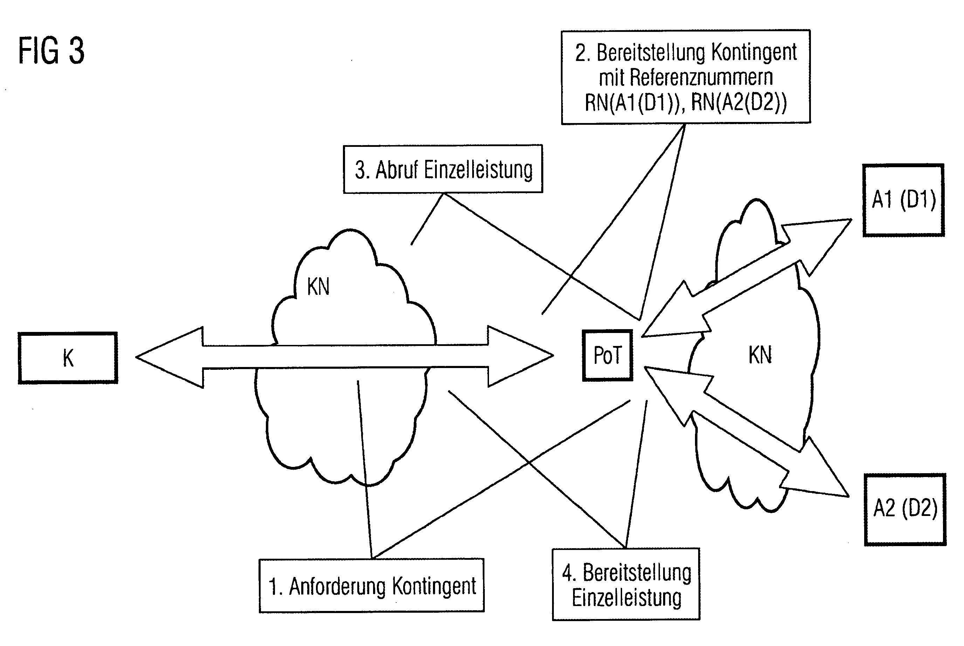

Anbieter A(F1) leitet diesen Transaktionschlüssel TAN(1) dann an die Sicherungseinrichtung PoT weiter und verlangt eine Überprüfung des Transaktionsschlüssels TAN(1) [siehe Fig. 1, 3. Überprüfung TAN(1)].

Die Sicherungseinrichtung PoT überprüft daraufhin ein weiteres Mal anhand vorgegebener Kriterien die Zahlungsfähigkeit des Reiseveranstalter K und ggf. die Leistungsfähigkeit des Anbieters A(Fl). Diese Überprüfung kann etwa in der Prüfung liegen, ob die letzte Bonitätsabfrage für den Reiseveranstalter K innerhalb eines gewissen Zeitraumes lag. Für den Anbieter A(Fl) kann die Überprüfung in einer erneuten Abfrage der Kundenzufriedenheit liegen. Sind die Kriterien erfüllt, so wird der Transaktionsschlüssel TAN(1) von der Sicherungseinrichtung PoT gegenüber dem Anbieter A(Fl) bestätigt.

Ist die Prüfung positiv verlaufen, weil die Kriterien erfüllt sind, gibt der Anbieter A(Fl) das Flugkontingent gegenüber dem Reiseveranstalter K frei und teilt diesem eine Referenznummer RN(Fl) mit [Fig. 1, 4. Bereitstellung Kontingente mit Referenznummer RN(Fl)].

Verläuft die Überprüfung der Kriterien negativ, so sendet die Sicherungseinrichtung PoT eine Ablehnung an den Anbieter A(F1).

In entsprechender Weise bucht der Reiseveranstalter K weitere Kontingente von Reiseleistungen, wie z.B. Hotelübernachtungen und Transferbusse bei den entsprechenden Anbietern A(Ho) und A(Tb), denen jeweils eine Referenznummer RN(Ho) und RN(Tb) zugeordnet wird [Fig. 1, 4. Bereitstellung Kontingente mit Referenznummer RN(Ho), Rn(Tb)].

Wird später von einem Endkunden EK bei dem Reiseveranstalter K eine Pauschalreise bestehend aus Flug, Hotel und Transferbus gebucht, so wird der jeweiligen gebuchten Einzelreiseleistung jeweils die dem jeweiligen Kontingent entsprechende Referenznummer RN(Fl), RN(Ho) und RN(Tb) zugeordnet [Fig. 1, 5. Endkundenbuchung unter Bezugnahme auf Referenznummer RN].

Um die Buchung des Endkunden EK abzuwickeln, fordert der Reiseveranstalter K einen neuen Transaktionsschlüssel TAN(2) bei der Sicherungseinrichtung PoT an, der nach entsprechender, oben dargestellter Prüfung erteilt wird [Fig. 1, 6. Anforderung und Bereitstellung TAN(2)].

Mit diesem neuen Transaktionsschlüssel TAN(2) werden vom Reiseveranstalter K die verschiedenen Einzelreiseleistungen der Anbieter A(Fl), A(Ho) und A(Tb) unter Bezugnahme auf die Referenznummern RN(Fl), RN(Tb) und RN(Ho) abgerufen [Fig. 1, 7. Abruf Einzelleistung, Angabe TAN(2)]. Es folgt eine entsprechende, wiederholte Überprüfung des Transaktionsschlüssels TAN(2) [Fig. 1, 8. Überprüfung TAN(2)]

Dem Endkunden EK wird vom Reiseveranstalter K eine Buchungsbestätigung seiner Einzelreiseleistungen, ggf. unter Angabe der Referenznummern RN bereitgestellt [Fig. 1, 9. Bereitstellung Einzelleistung].

Im Ergebnis ist es damit möglich, die Abrufe von Einzelreiseleistungen aus verschiedenen Kontingenten einzelnen Endkunden EK zuzuordnen.

In einer vorteilhaften Ausführung können Abrechnungsinformationen für die vom Endkunden EK gebuchten Reiseleistungen schon von der Sicherungseinrichtung PoT verarbeitet werden und dem Reiseveranstalter K bereitgestellt werden.

In einem zweiten Ausführungsbeispiel (Figur 2) wickelt der Kunde K Druck- und Frankieraufgaben über die jeweiligen Web-Dienste der Anbieter A(Dr) und A(Fr) unter Verwendung der Sicherungseinrichtung PoT ab.

Wie auch im vorangegangenen Ausführungsbeispiel sind die Kommunikationsendgeräte des Kunden K, der Anbieter A(Dr) und A(Fr) und einer Sicherungseinrichtung PoT über ein Kommunikationsnetzwerk KN miteinander verbindbar. Ebenso findet eine entsprechende Registrierung und erste Überprüfung ihrer Zahlungs- und/oder Leistungsfähigkeit statt.

Wiederum wird vom Kunden K zunächst eine Transaktionskette begonnen, indem er einen Transaktionsschlüssel TAN(1) von der Sicherungseinrichtung PoT anfordert, der ihm nach entsprechender Prüfung wie im Ausführungsbeispiel 1 bereitgestellt wird [Fig. 2, 1. Anforderung und Bereitstellung TAN(1)].

Unter Angabe dieses Transaktionsschlüssels TAN(1) werden bei den Anbietern A(Dr) und A(Fr) bestimmte Kontingente ihrer jeweiligen Dienstleistungen gebucht [Fig. 2, 2. Anforderung Kontingente, Angabe TAN(1)]. Nachdem eine dem Ausführungsbeispiel 1 entsprechende Überprüfung des Transaktionsschlüssels TAN(1) durch die Sicherungseinrichtung PoT stattgefunden hat [Fig. 2, 3. Überprüfung TAN(1)], wird das jeweilige Kontingent von den Anbietern A(Dr) und A(Fr) unter Angabe einer Referenznummer RN(Dr) und RN(Fr) bereitgestellt [Fig. 2, 4. Bereitstellung Kontingent mit Referenznummer RN].

Die Anforderung von Einzelleistungen vom Kunden K an die Anbieter A aus diesen Kontingenten erfolgt wiederum entsprechend dem Ausführungsbeispiel 1 unter Verwendung eines neuen, von der Sicherungseinrichtung auf Anfrage bereitgestellten und überprüften TAN(2) unter Angabe der entsprechenden Referenznummer RN(Dr) und RN(Fr) [Fig. 2, 5. Anforderung und Bereitstellung TAN(2) und Fig. 2, 6. Abruf Einzelleistung, Fig. 2, 7. Überprüfung TAN(2), Fig. 2, 8. Bereitstellung Einzelleistung].

Wiederum ist es so möglich, die Abrufe der Web-Dienste aus verschiedenen Kontingenten unter Verwendung der entsprechenden Referenznummern RN später genau zuordnen zu können.

Ein abschließendes Ausführungsbeispiel (Fig. 3) zeigt die Bestellung von Personaldienstleistungen D1 und D2 durch einen Kunden K über eine Sicherungseinrichtung PoT bei den Anbietern A1 und A2. Hier agiert die Sicherungseinrichtung PoT als Vermittler (sog. Proxy), wobei Kunde K und die Anbieter A1 und A2 jeweils nur mit der Sicherungseinrichtung PoT interagieren.

Kunde K, Anbieter A1 und Anbieter A2 sind wie in den vorangegangenen Ausführungsbeispielen bei der Sicherungseinrichtung PoT nach einer Überprüfung registriert.

In diesem Ausführungsbeispiel wird durch die Sicherungseinrichtung PoT zwischen dem Kunden K und den Anbietern A1 und A2 bei Buchung, Abruf und Bereitstellung der Personaldienstleistungen D1 und D2 derart vermittelt, dass es für den Kunden K so erscheint, als würden die Web-Dienste D1 und D2 von der Sicherungseinrichtung PoT und nicht von den Anbietern A1 und A2 erbracht. Denn der Kunde K tritt nur mit der Sicherungseinrichtung PoT in Kontakt.

Gleichzeitig erscheint es für die Anbieter A1 und A2 so, als würden die Web-Dienste D1 und D2 von der Sicherungseinrichtung PoT in Anspruch genommen, denn auch sie treten nur mit der Sicherungseinrichtung PoT und nicht mit dem Kunden K in Kontakt.

Zunächst werden vom Kunden K Kontingente bei der Sicherungseinrichtung PoT angefordert. Diese Anforderungen werden von der Sicherungseinrichtung PoT an die Anbieter A1, A2 weitergeleitet [Fig. 3, 1. Anforderung Kontingent].

Die Anbieter A1, A2 stellen daraufhin die Kontingente D1, D2 mit entsprechenden Referenznummern RN(A1(D1)), RN(A2(D2)) für die Sicherungseinrichtung PoT bereit, die diese wiederum an den Kunden K weiterleitet [Fig. 2, 2. Bereitstellung Kontingente mit Referenznummern RN(A1(D1)), RN(A2(D2))].

Der Kunde ruft später Einzelleistungen aus diesem Kontingent ab, die ihm daraufhin bereitgestellt werden. Wiederum vermittelt die Sicherungseinrichtung den Abruf und die Bereitstellung zwischen Kunden K und Anbietern A1, A2 [Fig. 3, 3. Abruf Einzelleistung, 4. Bereitstellung Einzelleistung]

Eine Verwendung von Transaktionsschlüsseln ist hier nicht erforderlich, da zwischen den Anbietern A1 und A2 und dem Kunden K keine direkte Kommunikation stattfindet. Die Überprüfung der Zahlungs- und/oder Leistungsfähigkeit kann jeweils von der Sicherungseinrichtung PoT vorgenommen werden, ohne dass dies für den Kunden K und die Anbieter A1 und A2 erkennbar ist.

## Patentansprüche

1. Verfahren zum gesicherten Bereitstellen von Web-Diensten (D) wenigstens eines Anbieters (A) für zumindest einen Kunden (K),
- bei dem Endgeräte des Kunden (K), des Anbieters (A) und eine Sicherungseinrichtung (PoT) über ein Kommunikationsnetz (KN) verbindbar sind,
- bei dem Kunde (K) und Anbieter (A) in einer Sicherungseinrichtung (PoT) registriert sind, die nach vorgesehener Kriterien hinsichtlich Zahlungs- und/oder Leistungsfähigkeit überprüft wurden,
- bei dem ein Kunde (K) vor der Anforderung wenigstens eines Web-Dienstes (D) bei der Sicherungseinrichtung (PoT) einen Transaktionsschlüssel (TAN(1)) anfordert, der ihm daraufhin nach einer ersten überprüfung der Zahlungs- und/oder Leistungsfähigkeit von Kunde (K) und Web-Dienstanbieter (A) von der Sicherungseinrichtung (PoT) übermittelt wird,
- bei dem der Kunde (K) mittels dieses Transaktionsschlüssels (TAN(1))bei dem jeweiligen Anbieter (A) zumindest eine Teilleistung eines Web-Dienstes (D) anfordert,
- bei dem der Anbieter (A) daraufhin bei der Sicherungseinrichtung (PoT) eine Überprüfung des Transaktionsschlüssels (TAN(1)) anfordert und dieser Transaktionsschlüssel (TAN(1)) nach wiederholter Überprüfung der Zahlungs- und Leistungsfähigkeit des Kunden (K) und/oder Web-Diensterbringers (D) von der Sicherungseinrichtung (PoT) bestätigt wird,
- **dadurch gekennzeichnet,**
- **dass** dem Kunden (K) vom Anbieter (A) daraufhin eine Referenznummer (RN) übermittelt wird,
- **dass** zum Abruf zumindest der Teilleistung des Web-Dienstes (D) ein weiterer Transaktionsschlüssel (TAN(2) ) vom Kunden (K) bei der Sicherungseinrichtung (PoT) angefordert und nach abschließender überprüfung der Zahlungs- und Leistungsfähigkeit von Kunde (K) und Web-Dienstanbieter (A) diesem Kunden (K) bereitgestellt wird,
- **dass** zumindest die angeforderte Teilleistung des web-Dienstes (D) unter Bezugnahme auf die Referenznummer (RN) mit dem weitern Transaktionsschlüssel (TAN(2)) abgerufen wird,
- **dass** nach Überprüfung des weiteren Transaktionsschlüssels (TAN(2)) zumindest die angeforderte Teilleistung des Web-Dienstes (D) geleistet wird.

2. Verfahren nach Anspruch 1, **dadurch gekennzeichnet, dass** bei der Überprüfung der Registrierung eine aktuelle Überprüfung mit vorgesehenen Kriterien hinsichtlich Zahlungs- und/oder Leistungsfähigkeit vorgenommen wird.

3. Verfahren nach Anspruch 1 oder 2, **dadurch gekennzeichnet, dass** der Kunde (K) nach Ausführung des Web-Dienstes (D) den oder die Transaktionsschlüssel (TAN(1),(2)) bei der Sicherungseinrichtung (PoT) abmeldet und die Sicherungseinrichtung (PoT) dem Kunden (K) unter Bezugnahme auf den oder die Transaktionsschlüssel (TAN(1),(2)) und den Web-Dienst (D) eine Gebühreninformation übermittelt.

4. Verfahren nach einem der vorhergehenden Ansprüche, **dadurch gekennzeichnet, dass** von der Sicherungseinrichtung (PoT) an den Anbieter (A) des Web-Dienstes (D) unter Bezugnahme auf den oder die Transaktionsschlüssel (TAN(1),(2)) ein Gebührenvorgang eingeleitet wird.

5. Verfahren nach einem der vorhergehenden Ansprüche, **dadurch gekennzeichnet, dass** der Web-Dienst (D) im Internet und/oder einem Intranet realisiert ist.

6. Sicherungseinrichtung (PoT) für ein gesichertes Bereitstellen von Web- Diensten (D) **dadurch gekennzeichnet, dass** sie zum Durchführen der Verfahrensschritte nach einem der Patentansprüche 1 bis 6 ausgelegt ist.

## Claims

1. Method for a secure providing of web services (D) of at least one provider (A) for at least one client (K),
- in which end devices of the client (K) and of the provider (A) and a security device (PoT) may be connected via a communication network,
- in which client (K) and provider (A) are registered in a security device (PoT) and have been examined according to predetermined criteria with regard to financial solvency and/or service capability,
- in which a client (K) requests a transaction key (TAN(1)) from the security device (PoT) prior to requesting at least one web service (D), the transaction key (TAN(1)) thereupon being transmitted by the security device (PoT) to the client (K) after a first examination of financial solvency and/or service capability of client (K) and web service provider (A),
- in which the client (K) requests at least a partial performance of a web service (D) from the respective provider (A) by means of this transaction key (TAN(1)),
- in which the provider (A) thereupon requests an examination of the transaction key (TAN(1)) from the security device (PoT) and this transaction key (TAN(1)) being confirmed by the security device (PoT) after repeated examination of the financial solvency and service capacity of the client (K) and/or web service supplier (D),
- **characterized in**
- **that** a reference number (RN) is thereupon transmitted to the client (K) by the provider (A),
- **that** for retrieving at least a partial performance of the web service (D), a further transaction key (TAN(2)) is requested by the client (K) from the service device (PoT) and provided to said client (K) after a final examination of the financial solvency and service capability of client (K) and web service provider (A).
- **that** at least the requested partial performance of the web service (D) is retrieved with respect to the reference number (RN) by means of the further transaction key (TAN(2)),
- **that** upon examination of the further transaction key (TAN(2)) at least the requested partial performance of the web service (D) is provided.

2. The method according to claim 1, **characterized in that** a current examination with predetermined criteria with regard to financial solvency and/or service capability is carried out during the examination of the registration.

3. The method according to claim 1 or 2, **characterized in that** the client (K) logs off the transaction key or keys (TAN(1), (2)) from the security device (PoT) upon carrying out the web service (D) and that the security device (PoT) transmits fee information to the client (K) with reference to the transaction key or keys (TAN(1), (2)) and the web service (D).

4. The method according to one of the preceding claims, **characterized in that** a fee process is initiated by the security device (PoT) to the provider (A) of the web service (D) with reference to the transaction key or keys (TAN(1), (2)).

5. The method according to one of the preceding claims, **characterized in that** the web service (D) is implemented in the internet and/or an intranet.

6. Security device (PoT) for a secure providing of web services (D), **characterized in that** it is configured according to any one of the patent claims 1 to 6 for carrying out the process steps.

## Revendications

1. Procédé pour la provision sécurisée de services de Web (D) d'au moins un prestataire (A) pour au moins un client (K) ;
- dans lequel les appareils terminaux du client (K), du prestataire (A) et un dispositif de sécurisation (PoT) peuvent être reliés par le biais d'un réseau de communication (KN) ;
- dans lequel le client (K) et le prestataire (A) sont enregistrés dans un dispositif de sécurisation (PoT) après contrôle de critères prédéfinis permettant de vérifier la solvabilité du client et la capacité de fourniture de service du prestataire ;
- dans lequel un client (K) demande une clé de transaction (TAN(1)) avant de demander au moins un service de Web (D) au dispositif de sécurisation (PoT), ladite clé étant transmise par le dispositif de sécurisation (PoT) après un premier contrôle de la solvabilité et/ou de la capacité de fourniture de service du client (K) et du prestataire de services de Web (A) ;
- dans lequel le client (K) demande, à l'aide de cette clé de transaction (TAN(1)), au prestataire respectif (A) au moins une fourniture partielle d'un service de Web (D) ;
- dans lequel le prestataire (A) demande ensuite au dispositif de sécurisation (PoT) une vérification de la clé de transaction (TAN(1)) et dans lequel la clé de transaction (TAN(1)) est confirmée par le dispositif de sécurisation (PoT) après un contrôle répété de la solvabilité et de la capacité de fourniture de service du client (K) et/ou du fournisseur de services de Web (D) ;
- **caractérisé en ce que** :
- un numéro de référence (RN) est alors transmis au client (K) par le prestataire (A) ;
- une autre clé de transaction (TAN(2)) est demandée par le client (K) au dispositif de sécurisation (PoT) pour appeler au moins la fourniture partielle du service de Web (D) et est mise à disposition de ce client (K) après ultime vérification de la solvabilité et de la capacité de fourniture de service du client (K) et du prestataire de services de Web (A) de ce client (K) ;
- au moins la fourniture partielle du service de Web (D) demandé est appelée avec la clé de transaction (TAN(2)) supplémentaire fournie en référence au numéro de référence (RN) ;
- au moins la fourniture partielle de service de Web (D) est fournie après vérification de la clé de transaction (TAN(2)) supplémentaire.

2. Procédé selon la revendication 1, **caractérisé en ce que** lors du contrôle de l'enregistrement, un contrôle actualisé est réalisé selon des critères prédéfinis de solvabilité et/ou de capacité de fourniture de service.

3. Procédé selon la revendication 1 ou 2, **caractérisé en ce que** le client (K) renvoie, après consommation du service de Web (D), la ou les clés de transaction (TAN(1),(2)) au dispositif de sécurisation (PoT) et que le dispositif de sécurisation (PoT) transmet au client (K) une information sur le montant facturé en référence à la clé ou aux clés de transaction (TAN(1),(2)) et au service de Web (D).

4. Procédé selon l'une quelconque des revendications précédentes, **caractérisé en ce qu'**une opération de facturation est transmise par le dispositif de sécurisation (PoT) au prestataire (A) du service de Web (D) en référence à la clé ou aux clés de transaction (TAN(1),(2) ).

5. Procédé selon l'une quelconque des revendications précédentes, **caractérisé en ce que** le service de Web (D) est fourni sur Internet et/ou sur un Intranet.

6. Dispositif de sécurisation (PoT) pour une provision sécurisée de services de Web (D), **caractérisé en ce qu'**il est conçu pour réaliser les étapes de procédé selon l'une quelconque des revendications 1 à 6.
